# EUROPEAN PATENT SPECIFICATION

(11) **EP 3 542 453 B1**
(45) Date of publication and mention of the grant of the patent: **02.11.2022**
(21) Application number: 16797932.7
(22) Date of filing: 18.11.2016
(51) Int. Cl.: H02K 29/08, F04D 13/06, F04C 2/10, F04C 11/00, F04C 15/00

(54) **ELECTRIC AUTOMOTIVE FLUID PUMP**
ELEKTRISCHE KFZ-FLÜSSIGKEITSPUMPE
POMPE À FLUIDE D'AUTOMOBILE ÉLECTRIQUE

(43) Date of publication of application: 25.09.2019
(73) Proprietor: Pierburg Pump Technology GmbH, 41460 Neuss (DE)
(72) Inventor: WULF, Andreas, 40549 Düsseldorf (DE)
(74) Representative: terpatent Patentanwälte ter Smitten Eberlein-Van Hoof Rütten Daubert
(86) International application number: PCT/EP2016/078091
(87) International publication number: WO 2018/091101

(56) References cited:
- DE-U1- 9 419 788
- US-A1- 2015 300 355

## Description

The present invention relates to an electric automotive fluid pump.

In particular, the present invention refers to an electric automotive fluid pump for pumping a fluid like e.g. a liquid lubricant for lubricating a combustion engine. The fluid pump comprises an electronically commutated motor with a motor rotor being permanently magnetized and with stator coils, and also comprises a motor electronics for electronically commutating and driving the stator coils of the motor. The fluid pump further comprises a pumping unit and a rotor shaft mechanically connecting a pump rotor of the pumping unit with the motor rotor, and a pump rotor magnet pole which cooperates with a stationary hall sensor.

US 2015/0300355 A1 discloses a liquid pump with the pump unit axially arranged between the electric motor and the motor control electronics.

DE 9419788 discloses a pump which is driven by a DC motor. The pump rotor is provided with a permanent magnet which is the signal generator for the hall sensor. The hall sensor signal is used to control the rotational speed of the electric motor.

EP 2 027 640 B1 describes a fluid pump comprising an electronically commutated motor. The hall sensors are electrically connected to the motor electronics, which is arranged in a separate housing. In order to avoid a heating of the motor electronics by the motor, the housing of the motor electronics is spaced apart from the motor housing.

If high pumping performance is required the cooling performance for cooling the motor electronics has to be improved which requires sophisticated technology.

The object of the present invention is to provide an electric automotive fluid pump with an improved cooling of the motor electronics and a simple construction.

This object is solved with an electric automotive fluid pump having the features of claim 1.

According to the present invention the pumping unit is arranged axially between the motor electronics and the mechanical part of the motor. The pump rotor body comprises at least one permanent magnet pole, which cooperates with at least one stationary hall sensor. The term "axially" according to the invention refers to a rotation axis of the rotor shaft connecting the motor rotor and the pump rotor. Since the motor electronics is arranged remote of the mechanical part of the motor, the motor electronics is not heated up by the motor coils. Further, the motor electronics is provided close to the pumping unit so that the fluid in the pumping unit actively cools the motor electronics. Thereby, the cooling of the motor electronics is improved. The hall sensor can be provided close to the motor electronics so that the signal quality is good and the construction is simple. As a consequence manufacturing costs can be decreased.

According to the present invention the electric automotive fluid pump comprises at least two axial oriented magnet poles. Axially oriented magnet poles are oriented so that the poles pointing in an axial direction i.e. in direction of a rotation axis of the rotor shaft. Accordingly, the magnet poles are easily detectable by the hall sensor which is likewise oriented in an axial direction. By using at least two magnet poles at least two positions of the pump rotor are detectable so that a commutation of the motor rotor dependent on the position is possible.

Preferably, the hall sensor is an integral part of the motor electronics. The motor electronics comprising the hall sensor therefore is arranged at one central position. Accordingly, measures for transmitting the signal of the hall sensor to the circuit board of the motor electronics are dispensable. As a consequence the design of the fluid pump is simplified.

In a further preferred embodiment the electric automotive fluid pump comprises a non-ferromagnetic partition wall which is provided axially between the pump rotor and the motor electronics. The partition wall preferably lies in a cross-plane. The partition wall separates the pumping unit from the motor electronics so that the motor electronics does not get into contact with the fluid. As the partition wall is non-ferromagnetic the magnetic field generated by the magnet poles is not shielded by the partition wall. Thus, the magnet poles are easily detectable by the hall sensor arranged beyond the partition wall.

Preferably, the hall sensor is arranged adjacent to the partition wall and axially opposite to the magnet pole. Thereby, the distance between the magnet poles and the hall sensor is minimized so that the detection quality of the magnet poles is improved.

According to a preferred embodiment, the number of magnet poles of the pump rotor is equal to the number of motor rotor poles. Accordingly, a separate magnet pole is provided at the pump rotor for each motor rotor pole. The motor rotor position can be determined by the hall sensor with a high accuracy so that a commutation of the motor rotor is improved. Preferably, the pump rotor magnet poles are axially in-line with the motor rotor poles.

According to a further preferred embodiment, the pump rotor is made of a non-ferromagnetic rotor body with separate permanent magnet elements defining the magnet pole. In particular, each magnet element defines one of the magnet poles. By providing a non-ferromagnetic material like e.g. a plastic material for the pump rotor comprising the magnet poles, the detection accuracy of the exact position of the magnet poles is not deteriorated by the pump rotor. Further, a material like e.g. a suitable plastic material can be chosen which has good fluidic characteristics and can be processed easily.

Preferably, the pump rotor is made of plastic bonded ferrite defining the magnet pole. The material "plastic bonded ferrite" comprises a plastic body in which ferromagnetic ferrite particles are provided. The pump rotor is made of this material by e.g. injection molding. The pump rotor can be easily manufactured. Further, a customized permanent magnetization of the pump rotor is possible for defining the magnet pole. Accordingly, manufacturing costs can be decreased.

In a preferred embodiment the number of magnet poles is even. Thereby, the magnet poles can be equally divided on both magnetization polarizations.

The magnetic polarization of the pump rotor magnet poles corresponds to the magnetic polarization of the motor rotor poles. Accordingly, the magnet poles of the pump rotor form a direct copy of the magnetic polarization of the motor rotor poles. Sensing the position of the motor rotor therefore is simplified.

The pumping unit is preferably a displacement pumping unit. With a displacement pumping unit a high discharge pressure can be provided. Additionally, the displacement pumping unit is a self-priming pumping unit. Furthermore, the displacement pumping unit is capable of pumping fluids having a high viscosity like e.g. oil.

The fluid pump is a liquid pump, preferably a lubricant pump. By using a liquid as a pumping medium the heat removal from the motor electronics is improved. Accordingly, the motor electronics is cooled more efficiently. According to a preferred embodiment the pumping unit is a gerotor pumping unit. A gerotor pumping unit is compact so that the size of the electric automotive fluid pump can be reduced. Further, the gerotor pumping unit has a low noise level and a high hydraulic efficiency. Furthermore, the gerotor pumping unit also has a high durability.

Alternatively, the pumping unit is an impeller pumping unit. Further, the impeller pumping unit has a compact design so that the total size of the fluid pump can be smaller. Furthermore, the impeller pumping unit is capable of high pumping volumes of the pumping fluid which can be a gas or a liquid, as for example a coolant liquid.

Further advantages will become evident by the following detailed description of an embodiment of the present invention in combination with the drawings, which show:
Figure 1 shows a longitudinal section of an electric automotive fluid pump according to an embodiment of the present invention; and
Figure 2 shows a cross section II-II of the fluid pump of Figure 1 with an axial view of the pump rotor.

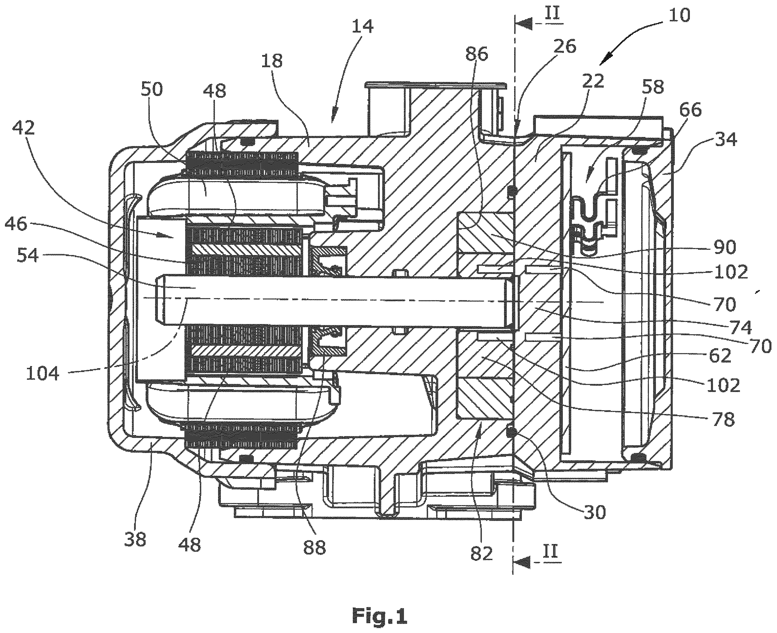

Figure 1 shows an electric automotive fluid pump 10 according to an embodiment of the present invention. The fluid pump 10 comprises a housing 14, having two parts, namely a motor housing part 18 and an electronics housing part 22. Both housing parts 18, 22 are mechanically connected to each other at a flange 26. A sealing ring 30 is provided at the flange 26 so as to fluidically seal an inner part of the housing 14 from an outer part. The electronics housing 22 is axially closed by an electronics housing cover 34, whereas the motor housing 18 is axially closed by a motor housing cover 38.

An electronically commutated motor 42 is provided in the motor housing 18. The electronically commutated motor 42 comprises a motor rotor 46 with motor rotor poles 48 being permanently magnetized and stator coils 50 surrounding the motor rotor 46. The motor rotor 46 is supported by a rotor shaft 54, which extends to the flange 26 between the motor housing 18 and the electronics housing 22.

A motor electronics 58 is provided in the electronics housing 22 for electronically commutating and driving the stator coils 50 of the motor 42. The motor electronics 58 comprises a printed circuit board 62 which comprises the electronic components. The printed circuit board 62 is electrically connected to an electrical connector (not shown) via connection elements 66. The motor electronics 58 further comprises two stationary hall sensors 70, which are electrically connected to the printed circuit board 62. The hall sensors 70 are arranged in axial bores in a non-ferromagnetic partition wall 74 of the electronic housing 22. The partition wall 74 is lying in a cross plane and is provided axially between the flange 26 and the motor electronics 58. The hall sensors 70 are axially oriented to a pump rotor 78 of a pumping unit 82. The pumping unit 82 is axially arranged between the non-ferromagnetic partition wall 74 and the motor 42.

The pump rotor 78 is mechanically connected and fixed to the rotor shaft 54 so as to be rotated by the motor rotor 46. A ring sealing body 88 is provided axially between the pumping unit 82 and the electronically commutated motor 42 to prevent the pumping medium from entering the electronically commutated motor 42. The pump rotor 78 is rotating in a pump cavity 86 defined in the motor housing 18.

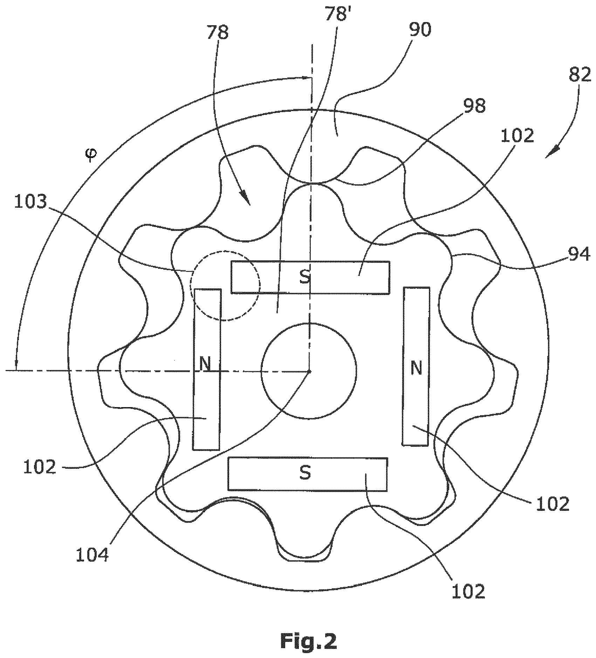

Figure 2 shows an axial view on the pumping unit 82 of figure 1. In this embodiment of the invention, the pumping unit 82 is formed as a gerotor pumping unit. An inner rotor 78 of the gerotor pumping unit 82 constitutes the pump rotor body 78' of the pumping unit 82. The rotor body 78' is formed as a gearwheel. The rotor body 78' drives an external ring gear 90 of the gerotor pumping unit 82, which external ring gear 90 defines an internal gear. The inner pump rotor 78 and the external ring gear 90 are arranged eccentrically to each other. By rotating the pump rotor 78 pump rotor teeth 94 of the inner pump rotor 78 engage with external rotor teeth 98 of the external ring gear 90 so that the external ring gear 90 rotates around the inner pump rotor 78.

The inner pump rotor 78 is made of a non-ferromagnetic material with four separate permanent magnet elements 102 integrated therein defining magnet poles N, S, which are magnetically axially oriented forming two different magnetic poles N, S. The four magnetic poles N, S are arranged to each other so as to include a rotational angle ϕ of 90°. The magnet poles N, S magnetically cooperate with the hall sensors 70. The hall sensors 70 are arranged axially adjacent to the partition wall 74, axially opposite to the magnet poles N, S and are positioned at the same radius with respect to a rotational axis 104 as the permanent magnet elements 102. Alternatively, the intermediate portions 103 between two adjacent magnet elements 102 are located at the same radius as the hall sensors 70. The motor electronics 58 detects the rotational position of the pump rotor 78 by means of the hall sensors 70. In this embodiment the magnetization orientation of the magnet poles N, S is equal to a magnetization orientation of the motor rotor poles. As a consequence also the position of the motor rotor 46 of the electronically commutated motor 42 is detectable.

From the above it should be clear that the electric automotive fluid pump is not limited to the above described embodiment. In particular other pumping units can be used. Also the number of magnet elements is not limited to the number of four.

### Reference signs

- 10: automotive fluid pump
- 14: housing
- 18: motor housing
- 22: electronic housing
- 26: junction
- 30: sealing ring
- 34: electronic housing cover
- 38: motor housing cover
- 42: electronically commutated motor
- 46: motor rotor
- 48: motor rotor poles
- 50: stator coil
- 54: rotor shaft
- 58: motor electronics
- 62: printed circuit board
- 66: connection element
- 70: hall sensor
- 74: partition wall
- 78: pump rotor
- 78': pump rotor body
- 82: pumping unit
- 86: pump cavity
- 88: sealing body
- 90: external rotor
- 94: pump rotor teeth
- 98: external rotor teeth
- 102: magnet element
- 103: intermediate portion
- 104: rotational axis
- N: magnet pole
- S: magnet pole
- ϕ: rotational angle

## Claims

1. Electric automotive fluid pump (10) comprising:
- an electronically commutated motor (42) with a motor rotor (46) being permanently magnetized and stator coils (50),
- a motor electronics (58) for electronically commutating and driving the stator coils (50) of the motor (42),
- a pumping unit (82) which is arranged axially between the motor electronics (58) and the motor (42),
- a rotor shaft (54) mechanically connecting a pump rotor (78) of the pumping unit (82) with the motor rotor (46), wherein the pump rotor (78) comprises a pump rotor body (78')
**characterized in that**
the pump rotor (78) comprises further at least two axial oriented permanent magnet poles (N,S), which cooperate with at least one axial oriented, stationary hall sensor (70) to detect the the permanent magnet poles (N, S), so that at least two positions of the pump rotor (78) are detectable, the motor (42) is configured such that the commutation of the stator coils (50) depends on the at least two detectable positions of the pump rotor (78).

2. Electric automotive fluid pump (10) according to claim 1, **characterized in that** the hall sensor (70) is integral part of the motor electronics (58).

3. Electric automotive fluid pump (10) according to one of the preceding claims, **characterized by** a non-ferromagnetic partition wall (74) which is provided axially between the pump rotor (78) and the motor electronics (58).

4. Electric automotive fluid pump (10) according to claim 3, **characterized in that** the hall sensor (70) is arranged adjacent to the partition wall (74) and axially opposite to the magnet pole (N, S).

5. Electric automotive fluid pump (10) according to one of the preceding claims, **characterized in that** the number of magnet poles (N, S) of the pump rotor (78) is equal to the number of motor rotor poles (48).

6. Electric automotive fluid pump (10) according to one of the preceding claims, **characterized in that** the pump rotor (78) is made of a non-ferromagnetic rotor body (78') with separate permanent magnet elements (102) defining the magnet pole (N, S).

7. Electric automotive fluid pump (10) according to one of the preceding claims 1-5, **characterized in that** the pump rotor is made of plastic bonded ferrite defining the magnet pole (N, S).

8. Electric automotive fluid pump (10) according to one of the preceding claims, **characterized in that** the number of magnet poles (N, S) is even.

9. Electric automotive fluid pump (10) according to one of the preceding claims, **characterized in that** the magnetic polarization of the pump rotor magnet poles (N, S) corresponds to the magnetic polarization of the motor rotor poles (48).

10. Electric automotive fluid pump (10) according to one of the preceding claims, **characterized in that** the pumping unit (82) is a gerotor pumping unit.

11. Electric automotive fluid pump (10) according to one of claims 1 to 9, **characterized in that** the pumping unit (82) is an impeller pumping unit.

12. Electric automotive fluid pump (10) according to one of the preceding claims, **characterized in that** the pumping unit (82) is a displacement pumping unit.

13. Electric automotive fluid pump (10) according to one of the preceding claims, **characterized in that** the fluid pump (10) is a liquid pump, preferably a lubricant pump.

## Patentansprüche

1. Elektrische Kraftfahrzeug-Fluidpumpe (10), aufweisend:
- einen elektronisch kommutierten Motor (42) mit einem permanent magnetisierten Motorrotor (46) und Statorspulen (50),
- eine Motorelektronik (58) zur elektronischen Kommutierung und Ansteuerung der Statorspulen (50) des Motors (42),
- eine Pumpeinheit (82), die axial zwischen der Motorelektronik (58) und dem Motor (42) angeordnet ist,
- eine Rotorwelle (54), die einen Pumprotor (78) der Pumpeinheit (82) mit dem Motorrotor (46) mechanisch verbindet,
wobei der Pumpenrotor (78) einen Pumpenrotorkörper (78') aufweist
**dadurch gekennzeichnet, dass**
der Pumpenrotor (78) ferner mindestens zwei axial ausgerichtete Permanentmagnetpole (N, S) aufweist, die mit mindestens einem axial ausgerichteten, stationären Hall-Sensor (70) zusammenwirken, um die Permanentmagnetpole (N, S) zu erfassen, so dass mindestens zwei Positionen des Pumpenrotors (78) erfassbar sind, wobei der Motor (42) so ausgebildet ist, dass die Kommutierung der Statorspulen (50) von den mindestens zwei erfassbaren Positionen des Pumpenrotors (78) abhängig ist.

2. Elektrische Kraftfahrzeug-Fluidpumpe (10) nach Anspruch 1, **dadurch gekennzeichnet, dass** der Hall-Sensor (70) integraler Bestandteil der Motorelektronik (58) ist.

3. Elektrische Kraftfahrzeug-Fluidpumpe (10) nach einem der vorhergehenden Ansprüche, **gekennzeichnet durch** eine nichtferromagnetische Trennwand (74), die axial zwischen dem Pumpenrotor (78) und der Motorelektronik (58) vorgesehen ist.

4. Elektrische Kraftfahrzeug-Fluidpumpe (10) nach Anspruch 3, **dadurch gekennzeichnet, dass** der Hall-Sensor (70) benachbart zu der Trennwand (74) und axial gegenüber dem Magnetpol (N, S) angeordnet ist.

5. Elektrische Kraftfahrzeug-Fluidpumpe (10) nach einem der vorhergehenden Ansprüche, **dadurch gekennzeichnet, dass** die Anzahl der Magnetpole (N, S) des Pumpenrotors (78) gleich der Anzahl der Motorrotor-Pole (48) ist.

6. Elektrische Kraftfahrzeug-Fluidpumpe (10) nach einem der vorhergehenden Ansprüche, **dadurch gekennzeichnet, dass** der Pumpenrotor (78) aus einem nicht-ferromagnetischen Rotorkörper (78') mit separaten Permanentmagnet-Elementen (102), die die Magnetpole (N, S) ausbilden, hergestellt ist.

7. Elektrische Kraftfahrzeug-Fluidpumpe (10) nach einem der vorhergehenden Ansprüche 1-5, **dadurch gekennzeichnet, dass** der Pumpenrotor aus kunststoffgebundenem Ferrit besteht, der den Magnetpol (N, S) ausbildet.

8. Elektrische Kraftfahrzeug-Fluidpumpe (10) nach einem der vorhergehenden Ansprüche, **dadurch gekennzeichnet, dass** die Anzahl der Magnetpole (N, S) gerade ist.

9. Elektrische Kraftfahrzeug-Flüssigkeitspumpe (10) nach einem der vorhergehenden Ansprüche, **dadurch gekennzeichnet, dass** die magnetische Polarisation der Pumpenrotor-Magnetpole (N, S) mit der magnetischen Polarisation der Motorrotor-Pole (48) übereinstimmt.

10. Elektrische Kraftfahrzeug-Fluidpumpe (10) nach einem der vorhergehenden Ansprüche, **dadurch gekennzeichnet, dass** die Pumpeinheit (82) eine Gerotor-Pumpeinheit ist.

11. Elektrische Kraftfahrzeug-Fluidpumpe (10) nach einem der Ansprüche 1 bis 9, **dadurch gekennzeichnet, dass** die Pumpeinheit (82) eine Impeller-Pumpeinheit ist.

12. Elektrische Kraftfahrzeug-Fluidpumpe (10) nach einem der vorhergehenden Ansprüche, **dadurch gekennzeichnet, dass** die Pumpeinheit (82) eine Verdränger-Pumpeinheit ist.

13. Elektrische Kraftfahrzeug-Fluidpumpe (10) nach einem der vorhergehenden Ansprüche, **dadurch gekennzeichnet, dass** die Fluidpumpe (10) eine Flüssigkeitspumpe, vorzugsweise eine Schmiermittelpumpe, ist.

## Revendications

1. Pompe à fluide électrique pour automobile (10) qui comprend :
- un moteur à commutation électronique (42) avec un rotor de moteur (46) à aimantation permanente et des bobines de stator (50),
- une électronique de moteur (58) pour commuter électroniquement et exciter les bobines de stator (50) du moteur (42),
- une unité de pompage (82) qui est disposée axialement entre l'électronique de moteur (58) et le moteur (42),
- un arbre de rotor (54) reliant mécaniquement un rotor de pompe (78) de l'unité de pompage (82) avec le rotor du moteur (46),
dans lequel le rotor de pompe (78) comprend un corps de rotor de pompe (78')
**caractérisé en ce que**
le rotor de pompe (78) comprend au moins deux pôles d'aimant permanent (N, S) orientée axialement qui coopèrent avec au moins un senseur à effet Hall fixe orienté axialement (70) pour détecter les pôles d'aimant permanent (N, S), de sorte qu'au moins deux positions du rotor de pompe (78) sont détectables, le moteur (42) est configuré de sorte que la commutation des bobines de stator (50) dépende des au moins deux positions détectables du rotor de pompe (78).

2. Pompe à fluide électrique pour automobile (10) selon la revendication 1, **caractérisée en ce que** le senseur de Hall (70) fait partie intégrante de l'électronique du moteur (58).

3. Pompe à fluide électrique pour automobile (10) selon l'une des revendications précédentes, **caractérisée par** une paroi de séparation non ferromagnétique (74) qui est prévue axialement entre le rotor de la pompe (78) et l'électronique du moteur (58).

4. Pompe à fluide électrique pour automobile (10) selon la revendication 3, **caractérisée en ce que** le senseur à effet Hall (70) est disposé de manière adjacente à la paroi de séparation (74) et axialement opposé au pôle magnétique (N, S).

5. Pompe à fluide électrique pour automobile (10) selon l'une des revendications précédentes, **caractérisée en ce que** le nombre de pôles magnétiques (N, S) du rotor de la pompe (78) est égal au nombre de pôles du rotor du moteur (48).

6. Pompe à fluide électrique pour automobile (10) selon l'une des revendications précédentes, **caractérisée en ce que** le rotor de pompe (78) est constitué d'un corps de rotor non ferromagnétique (78') avec des éléments d'aimant permanent séparés (102) définissant les pôles magnétiques (N, S).

7. Pompe à fluide électrique pour automobile (10) selon l'une des revendications précédentes 1-5, **caractérisée en ce que** le rotor de la pompe est constitué de ferrite liée par du plastique définissant les pôles magnétiques (N, S).

8. Pompe à fluide électrique pour automobile (10) selon l'une des revendications précédentes, **caractérisée en ce que** le nombre de pôles magnétiques (N, S) est pair.

9. Pompe à fluide électrique pour automobile (10) selon l'une des revendications précédentes, **caractérisée en ce que** la polarisation magnétique des pôles magnétiques du rotor de la pompe (N, S) correspond à la polarisation magnétique des pôles du rotor du moteur (48).

10. Pompe à fluide électrique pour automobile (10) selon l'une des revendications précédentes, **caractérisée en ce que** l'unité de pompage (82) est une unité de pompage à gérotor.

11. Pompe à fluide électrique pour automobile (10) selon l'une des revendications 1 à 9, **caractérisée en ce que** l'unité de pompage (82) est une unité de pompage à turbine.

12. Pompe à fluide électrique pour automobile (10) selon l'une des revendications précédentes, **caractérisée en ce que** l'unité de pompage (82) est une unité de pompage volumétrique.

13. Pompe à fluide électrique pour automobile (10) selon l'une des revendications précédentes, **caractérisée en ce que** la pompe à fluide (10) est une pompe à liquide, de préférence une pompe à lubrifiant.
